(19) Europäisches Patentamt
European Patent Office
Office européen des brevets

(11) Publication number: 0 018 184 B1

# (12) EUROPEAN PATENT SPECIFICATION

(45) Date of publication of patent specification: 06.10.82

(51) Int. Cl.³: C 10 G 9/32, C 21 B 13/14

(21) Application number: 80301172.5

(22) Date of filing: 11.04.80

## (54) An integrated process for the thermal cracking of a heavy oil and the reduction of an iron ore.

(30) Priority: 11.04.79 JP 43804/79

(43) Date of publication of application: 29.10.80 Bulletin 80/22

(45) Publication of the grant of the patent: 06.10.82 Bulletin 82/40

(84) Designated Contracting States: BE DE FR GB IT NL SE

(56) References cited:
GB - A - 1 049 332
US - A - 2 988 442
US - A - 3 264 209

(73) Proprietor: KOBE STEEL LIMITED
3-18, Wakinohama-Cho 1-Chome
Fukiai-Ku Kobe-Shi Hyogo-Ken (JP)

(73) Proprietor: KOA OIL COMPANY LIMITED
6-2, Ohte-Machi 2-Chome
Chiyoda-Ku Tokyo-To (JP)

(72) Inventor: Mori, Kenji
3-15-616, Takaodori 4-chome
Nada-ku, Kobe-shi, Hyogo-ken (JP)
Inventor: Miura, Eiji
384, Igushi
Mitaka-Shi Tokyo-To (JP)
Inventor: Nishida, Reijiro
Sunlight Pastorale Ichibangai C-405, 730, Kogane
Matsudo-Shi, Chiba-Ken (JP)
Inventor: Koizumi, Kiyohiko
28-10, Nishiki 1-Chome
Nerima-ku Tokyo-To (JP)

(74) Representative: Laredo, Jack Joseph et al,
Elkington and Fife High Holborn House 52/54
High Holborn
London, WC1V 6SH (GB)

EP 0 018 184 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An integrated process for the thermal cracking of a heavy oil and the reduction of an iron ore.

Field of the Invention

This invention relates to an integrated process for the thermal cracking of a heavy oil and the reduction of an iron ore.

Background of the Invention

This invention relates generally to a process for reducing iron ores and more particularly to a process for producing reduced or sponge iron by reducing iron ore with carbon which has been produced as a by-product of the thermal cracking of heavy oil.

As is known, the blast furnace-converter process is widely utilized at present as a process for producing steel. This blast furnace-converter process is generally considered to be a substantially perfected technique, but a number of problems are still outstanding.

More specifically, in the blast furnace-converter process in order to produce iron by the removal of oxygen (reducing) from iron ore (iron oxide), pig iron containing an excess of carbon is first obtained in the blast furnace and then, in the converter, the excess carbon, together with the accompanying silicon, phosphorous, etc., is oxidized and removed so as to produce steel. Because of this procedure, the theoretical efficiency is inevitably poor. Moreover, there is a problem in that the strongly caking coal which is used as a coke raw material for blast furnaces is becoming scarce throughout the world.

Another known process involves carrying out the reduction of iron ore in the solid state while it is in contact with a reducing agent, in general, to a degree of reduction of 85 percent or more so as to obtain sponge iron. This is followed by melting and refining the sponge iron in an electric furnace to produce steel. This process does not entail the theoretically wasteful combination of superfluous reduction followed by oxidation of excessive carbon and the accompanying silicon, phosphorous, etc., which is required in the above-described blast furnace-converter process. Another advantageous feature is that strongly caking coal, which is a coke raw material for blast furnaces, is not required.

Furthermore, a technique is being industrially tested wherein the thus reduced iron ore pellets with a degree of reduction of 70 to 90 percent are used as starting materials for blast furnaces in order to effect a saving in the consumption of fuel coke and to improve productivity.

One reason why these solid state or direct reduction processes do not become widespread throughout the world is that the regions where the reducing agents and the raw materials thereof for the production of sponge iron, that is, coals, brown coal and natural gases, as well as sources of carbon, $H_2$ and CO gas, for example, are maldistributed over the earth, and regions where such processes are economically advantageous are limited.

Processes for producing sponge iron may be clarified into:

(a) the type of reducing furnace used in the rotary-kiln process, the shaft furnace process, the fixed-bed furnace process and the fluidized-bed furnace process; and

(b) the kind of reducing agent in the solid reducing agent process and the gaseous reducing agent process.

In general, the rotary-kiln process is used with the solid reducing agent process, while the remaining three processes divided by type of furnace are used with the gaseous reducing agent process.

Leaving aside, for the moment, the production of sponge iron, the background of the second aspect of this invention will be considered. In view of the limited reserves of petroleum resources, the conversion of relatively heavy fractions amongst the petroleum fractions into light fractions so as to increase their commercial value is of considerable importance. For this purpose, the fluidized catalytic cracking process (FCC process) in which heavy oil is subjected to catalytic thermal cracking in the presence of catalyst particles such as silica or alumina in a fluidized state has been used for some considerable time.

In this FCC process, however, carbon (coke) produced as a by-product of the thermal cracking of a heavy oil is deposited on the catalyst particles and lowers their activity. For this reason, frequent regeneration of the catalyst is necessary. Furthermore, another difficulty is that this process is applicable only to distillate oils such as ordinary gas oil and high-quality residue oils of limited kinds.

A fluid coking process for recovering the by-product coke in the above-described thermal cracking of heavy oil is also widely practised. In this process, heavy oil is thermally cracked with the use of fine coke in a fluid state as a heat and fluid medium. Because the fine coke is used, not as a catalyst, but merely as a heat and fluid medium, there is no problem of loss of activity even when the by-product coke is deposited. Accordingly, this process has the advantage of ease of processing the heavy oil, and is generally used for the preparation of the feed oil in the FCC method.

The coke formed as a by-product in the fluid coking process is taken out of the reactor, and a portion thereof is burned to provide heat for heating fine coke which is recirculated to the reactor. At the same time, the remainder of the coke is taken out as a product. In contrast with the delayed coking process which is comparable as a method of processing heavy oil, this fluid coking process is a fully continuous process. While this process has a number of advantages such as a high yield of cracked products, the

quality of the product coke is so poor that it cannot be used except as a fuel.

U.S. Patent No. 3264209 is concerned with simultaneously cracking hydrocarbons and producing partially reduced and coked iron ore as a feed to a reducing furnace. The process involves subjecting a hydrocarbon feed to cracking in a cracking zone in contact with a fluidised bed of fine particulate iron ore. Coke is deposited on the ore and the hydrocarbon feed is both cracked and upgraded, the upgraded hydrocarbon being recovered. The coked iron ore was transferred to a fluidised bed of ore in a regeneration zone where a portion of coke is burned off through contact with oxygen containing gas so as to form an intimate mixture of coke and partially reduced iron ore. A portion of the latter is passed to the cracking zone as a catalyst and a remaining portion is recovered as a feed for a reducing furnace. The product of this process is pig iron. Accordingly, the application of such process to steel making in a plant which already possesses a converter would be advantageous since molten pig iron from the process may be directly introduced into the converter. However, because of the size of the plant needed, such plant can only be provided in a restricted number of areas. It should also be noted that pig iron normally contains about 4% of carbon so that it is necessary to use about 50 $Nm^3$ (normal cubic meters) of oxygen per ton of steel product. The specification does not particularise the nature of the hydrocarbon oil which is employed except by saying generally that it is coke forming. So-called recycle heavy gas oil is however, mentioned in the specific description as a secondary hydro-carbon source. The latter has a Conradson carbon value which is below 0.5% and accordingly a low effectiveness as a coke source whilst at the same time it has a substantial economic value so that the use of such a secondary hydro-carbon source entails economic penalties. It should furthermore be noted that in the process of this U.S. Patent the entire carbon is produced in the cracking stage and accordingly a high proportion of carbon is required in order to produce pig iron, the coke/ore ratio being normally in the range of from 0.3 to 0.6 pound (approximately from 0.135 to 0.27 kilogram) of coke per pound (approximately 0.45 kilogram) of ore. This also involves an economic penalty since the process of the U.S. Patent requires a relatively high oil to ore ratio in the cracking stage. Finally, there is no teaching in the U.S. Patent of the need for intimate contact between the coke and iron ore to achieve a critical advantage in the solid state reduction stage.

U.S. Patent No. 2988442 teaches a process in which hydrocarbon gases are cracked into carbon and hydrogen by bringing the gases into contact with partially reduced iron ore containing metallic iron heated to a temperature in the vicinity of 530 to 580°C, the hydrogen and carbon being both used in the reduction of the ore to the metal. More particularly, the process involves three steps. The first is decomposition of the gas using metallic iron as a catalyst, whereby the hydrogen and carbon are obtained. The second is the removal of between about 40 and 80% of the oxygen from the oxide and the formation of metallic iron by the reduction of iron oxide at a temperature between about 500 and 580°C with hydrogen produced by the catalytic decomposition of the hydrocarbon (stage 1). The third is the completion of the reduction of the iron oxide by heating of the mixture of iron oxide, metallic oxide and carbon to at least 900°C so as to cause the carbon to react with the oxides. The process accordingly involves the use of carbon-deposited iron ore from a hydrocarbon cracking process to produce sponge iron. However, the process of the U.S. Patent uses light hydrocarbon gases such as propane and butane, which per se are valuable as hydrocarbon sources. Furthermore, iron ore is first reduced by hydrogen which is obtained by cracking of the hydrocarbon gases to a substantial extent (i.e. 40 to 80%) and the remaining portion is reduced by deposited carbon. The process therefore does not contemplate in any way the use of a specific oil, namely vacuum distillation residue oil and also would result in practice in an inefficient production of sponge iron or of steel. The process basically relies on the hydrogen reduction of iron ore which is essentially different from a completely solid state reduction in which substantially the entire reduction is effected by the use of a combination of solid state ore and solid state reducing agent. The production of hydrogen in the cracking step is itself disadvantageous when the aim is to achieve an effective recovery of valuable hydrocarbons. Although the process does lead to the reduction of iron ore to sponge iron, the reduction process is comparable to reduction by means of a blast furnace, cupola, low-shaft furnace or electric steel furnace, most of these being considered molten state reduction processes. It does not therefore appear that the process achieves the substantial advantages which can be obtained from the use of deposited carbon as a reducing agent in the solid state reduction of iron ore to produce sponge iron. The patent also refers to final reduction in accordance with an earlier U.S. Patent, namely, U.S.—A No. 2,596,877 when sponge iron is to be produced. This involves the feeding of the oxide grains to be reduced (iron or copper oxide), for instance crushed iron ore or iron ore concentrate, to a furnace which is filled with reducing gas at 1100 to 1200°C. The grains are deposited onto an inclined surface within the furnace in such a way that the particles do not come into contact with the walls or roof of the furnace. The grains slide or roll over the inclined surface but are reduced in the surface layer of the grain practically instantly and sinter to the surface beneath after having passed downwards a certain distance.

The reduction then proceeds in the stationary grain which is surrounded almost entirely by the reducing atmosphere. After an interval of time, more oxide is fed into the furnace and reduced in the same manner forming a new surface on the previously reduced grains. The product represents a coherent block of sintered sponge iron grains which may be further treated in air without being reoxidised. The sponge iron blocks obtained are highly porous and final reduction may be effected by causing the reducing gas to pass wholly or partly through the block or body of sponge iron before it enters the furnace room surrounding the block. When effecting reduction by means of hydrocarbons such as natural gas or oil or gases formed in the treatment of oil or oil shale, the hydrocarbons are decomposed so that carbon is obtained in the form of soot suspended in the gas. This is partly dissolved in the iron and later causes reduction also in the inner part of the sponge iron block whereby an outer current of carbon monoxide gas is created. This is said to achieve a reduction of the remaining oxygen in the sponge iron to lower percentages than will otherwise have been possible. Furthermore, sponge iron containing more carbon than required for the reduction of the remaining oxygen may also be used according to the process of this latter U.S. Patent No. 2,596,877.

The applicants have sought an improved integrated process for the thermal cracking of hydrocarbon oil and production at the same time of sponge iron. This process involves cracking oil in the presence of iron ore particles in a fluidised state in a thermal cracking reactor to produce light oils and cracked gases. At the same time, by-product carbon is deposited on the iron ore particles and the resulting carbon-deposited iron ore particles are transferred to a reducing furnace in which the iron ore is reduced. The applicants have made the discovery that the latter integrated process for producing sponge iron with simultaneous cracking of hydrocarbon oil is improved if the oil is chosen to be a vacuum distillation residue oil with a Conradson carbon value of from 5 to 40% and a specific gravity of from 0.9 to 1.10, and if the mixture of carbon-deposited iron ore together with additional carbon is heated in the reducing furnace to a temperature in the range of from 800 to 1200°C.

According to the present invention, therefore, we provide an integrated process for thermal cracking of hydrocarbon oil and production of iron which comprises: thermally cracking the hydrocarbon oil in the presence of iron ore particles in a fluidized state in a thermal cracking reactor thereby to produce light oils and cracked gases; at the same time causing by-product carbon thus formed to deposit on the iron ore particles; and transferring the resulting carbon-deposited iron ore particles to a reducing furnace thereby to reduce the iron ore, characterised in that said hydrocarbon is a vacuum distillation residue oil having a Conradson carbon value of from 5 to 40 percent and a specific gravity of from 0.9 to 1.10, in that said carbon-deposited iron ore is introduced into the reducing furnace together with additional carbon, and in that the thus introduced mixture of the carbon deposited iron ore and the additional carbon is heated at a temperature of from 800 to 1,200°C in the reducing furnace, thereby to produce sponge iron.

The process of the present invention for the production of sponge iron involves inter alia the advantages that the carbon used as reducing agent is supplied in a co-existing state which is convenient for the production of the iron ore raw material. Another advantage is that the process makes it possible to utilise effectively the carbon (coke) which is formed as a by-product in the fluidised catalytic or thermal cracking of the vacuum distillation oil which is employed as the hydrocarbon oil simultaneously thermally cracked.

It should be noted that in the case of the sponge iron product of the present invention additional oxygen is not required since the oxygen and carbon contained in the sponge iron compensate for each other. This is distinct advantage of steel making involving sponge iron.

Another advantage of sponge iron is that it is particularly suited to conversion to steel in an electric arc furnace as discussed above.

The process of the invention uses a vacuum distillation residue oil having a Conradson carbon value of from 5 to 40% which is of low commercial value in itself so that it provides a distinct economic advantage as explained in detail below. Furthermore, the cracking stage in the process of the invention produces a part of the carbon which is used in the subsequent reducing step. The process furthermore involves lower coke/ore ratios than in the prior art as is also explained in detail below and in addition a lower oil to ore ratio in the cracking stage.

In a preferred embodiment of the invention as described below, intimate contact is achieved between the coke and the iron ore so as greatly to improve the efficiency of the solid state reduction of the ore.

The present invention which teaches an industrially economic, efficient and feasible integrated process for the thermal cracking of vacuum distillation residue oil and the production of sponge iron has accordingly numerous advantages which can be summarised as follows:

(a) Vacuum distillation residue oil, which is of low economic value, is used as an effective carbon source to reduce the iron ore;

(b) The carbon which is thus deposited through cracking is used as part of the carbon needed to reduce the iron ore whereby the maximum production of sponge iron is effected in combination with the above feature (a);

(c) Ideal solid-solid contact is achieved

between the carbon and the iron ore to achieve solid state reduction of the ore.

The iron ore which is used may be selected from haematite, magnetite, limonite, siderite and mixtures of at least two thereof. The preferred means for carrying out the process of the invention involves a thermal cracking reactor for the first stage which is in the shape of an elongated vertical cylinder provided at its upper part with a cyclone and a scrubber, and a rotary kiln as the reducing furnace.

The iron ore particles with the carbon deposited thereon are preferably enlarged in size prior to their introduction into the reducing furnace.

As regards the cracking stage, steam is preferably injected into the thermal cracking reactor, so as to fluidize the iron ore particles. The thermal cracking is itself preferably carried out at a temperature within the range of from 400 to 630°C.

The nature, uses, and advantageous features of this invention will be apparent from the following detailed description, beginning with a consideration of broad aspects of the invention and concluding with specific examples of practice, when read in conjunction with the accompanying drawing briefly described below.

Brief Description of the Drawing

In the drawing, the single figure is a flow chart of one example of an apparatus for practising the invention.

Detailed Description of the Invention

First, some of the advantageous features of the process of the invention are discussed in detail with respect to the thermal cracking and reduction steps.

Thermal cracking step

The thermal cracking step of the process of the invention is first compared with the fluid coking process.

In the fluid coking process, the carbon formed by the thermal cracking has no applicability except as a fuel. In contrast, in the process of this invention, this carbon formed in the thermal cracking step is effectively utilized as a reducing agent for iron ore in the subsequent reducing step. Furthermore, the coke in the powder state in the fluid coking process is inactive with respect to the thermal cracking reaction. In contrast, depending on its type, the iron ore used in the process of this invention, although not so effective as a silica or alumina catalyst in the FCC process, can be expected as a result of its catalytic action to produce distilled oils of better quality than are obtained by a mere thermal cracking. Examples of the utilization of iron ore as a catalyst for the catalytic cracking of a petroleum fractions are disclosed in references such as E.I. Kazakov, Khim i Tekhnol, Smol term Pererabotki Tverd. Topliv, Akad. Nauk SSSR, Inst Goryuch, skop 1965, 86—98 and V.V. Patrikeev, *et al*, Zh. Prikl Khim. *38*(1) 148—153.

The thermal cracking step is now compared with the FCC process.

In the FCC process, the deterioration of the catalyst due to heavy metals in the feed oil and by-product carbon becomes a problem. In contrast, the iron ore particles in the process of this invention are continuously drawn out and used as a raw material in the reduction step, so that there is no need to re-circulate the iron ore particles to the cracking reactor in order to maintain activity. Recirculation of the iron ore particles is, however, possible if it is to be used as a heat source, depending on the energy requirements. Since the restriction of the production of carbon as a by-product is not essential in the thermal cracking step, residual oil from vacuum distillation which is of poor quality as used in the fluid coking process can be used as a feed oil.

It will readily be understood that, in the thermal cracking step, the iron ore particles, similarly to the fine coke in the fluid coking process or the catalyst particles in the FCC process, function also as a medium for taking the formed carbon out of the cracking reactor and for preventing clogging of the reactor.

Reduction Process

The greatest advantage of the steps of reducing iron ore according to this invention in comparison with known sponge iron production processes is that, since, in the preceding cracking step the iron ore which is the material to be reduced and the reducing agent carbon are accumulated in a uniformly mixed state with deposited carbon enveloping each ore particle, which state is extremely convenient for the reducing reaction, a special mixing or kneading apparatus is not necessary prior to the reducing step.

More specifically, the overall reducing reaction of the iron ore due to solid carbon is, in general, expressed as follows with respect to haematite:

$$2Fe_2O_3 + 3C = 4Fe + 3CO_2 \quad (1)$$

In practice, however, when the temperature rises above 750°C, at which level the reaction of formula (4) given below becomes vigorous, the reacctions of the following formulae (2), (3) and (4) progress simultaneously:

$$Fe_2O_3 + CO = 2FeO + CO_2 \quad (2)$$

$$FeO + CO = 2Fe + CO_2 \quad (3)$$

$$CO_2 + C = 2CO \quad (4)$$

When the progress of the reduction reaction is considered, it is understandable that the closer the place where the reactions of formulae (2) and (3) occur (boundary surface between the

ore cores yet to be reduced and the reduced iron shells in the iron ore particles) and the place where the reaction of formula (4) occurs (surfaces of the carbon particles), the easier it is for the $CO_2$ generated according to formulae (2) and (3) to migrate to the surfaces of the carbon particles formed by Boudouard's reaction according to formula (4), and a high reduction rate, which is the overall result of reactions (2), (3) and (4), is obtained. In the case where the place at which the reactions of formulae (2) and (3) occur and the place where the reaction of formula (4) occurs are close together in this manner, there is a characteristic advantage in that there is no substantial retardation of the reduction rate; this is especially true in the latter period (for example, a reduction rate of 80 percent or more) of the reduction in which the sintering between the formed reduced iron particles progresses, and the diffusion rate of the $CO_2$ formed determines the rate of the reduction reaction.

In this connection, in the cracking step of this invention, fine particles of carbon are chemically deposited through thermal cracking of the heavy oil on the surface of the iron ore in the state of particles of a fineness permitting fluidization. For this reason, a microscopically uniform starting-material complex of the iron ore and the reducing agent is obtained in a state wherein the centres of the iron ore particles and the carbon surface are extremely close together, that is, in an ideal state for the progress of the reducing reaction.

The quantity of the reducing agent necessary for the reduction of iron ore to metallic iron is, in general, from 10 to 15 percent. However, even in the case where this quantitative percentage is changed in order to increase the efficiency of the cracking process step, the percentage can be easily controlled to an appropriate value by adding and mixing additional reducing agent or iron ore. Mixing can be easily accomplished, of course.

Anthracite, coke and bituminous coal, for example, which are ordinarily used as solid reducing agents have an ash content of 5 percent or more, but the carbon produced as a by-product of the thermal cracking of heavy oil has a lower ash content. For this reason, while a post-treatment such as the separation of the sponge iron and the ash of the reducing agent is generally required in the art, according to this invention, there is no need to separate the ash content from the sponge iron after reduction. Furthermore, when the ash content is low, in the case where a rotary kiln is used for the sponge iron producing apparatus, the formation of a kiln ring caused by the accumulation of firelite is almost negligible, and the operation is facilitated. Another advantage is that the difficulty of forming a fluidized bed because of the occurence of agglomeration due to firelite formation in the case where fluidized bed reduction is carried out, can also be avoided.

The reduction step of this invention may be classified as a solid process in view of the kind of reducing agent involved in the process. However, it differs from an ordinary solid reducing agent process in that the iron ore particles, which are the material to be reduced, and the reducing agent carbon are supplied in a uniformly mixed state even microscopically. For this reason, a shaft furnace, a fixed bed furnace or a fluidized bed furnace can be used as the reducing furnace, provided that a suitable heating medium is selected as an alternative furnace in place of the rotary kiln which is ordinarily used.

Further, since the sponge iron produced by the instant process contains a suitable quantity of residual carbon, it has the advantage of being easily melted.

It is to be noted that the method of reducing iron ore in a fluidized bed reducing furnace with petroleum as a reducing agent is known, for example, from Japanese Patent Application Nos. 30361/1977 and 30362/1977; and G. Tomasicchio Proc. Int. Symp. on Fluidization, Netherlands Univ. Press 1967. In the case of the reduction of iron ore in a fluidized bed reducing furnace in this manner, a reducing temperature of at elast 650°C is needed, and, in addition, most of the petroleum is consumed as a reducing agent. For this reason, even if the heavy oil can be gasified, it cannot be expected that light oils can be obtained as products. Furthermore, the reason why the reduction of iron ore cannot be carried out adequately at a low temperature is as set forth in these references.

An important characteristic of this invention is that the cracking of the heavy oil in the fluidized bed and the reduction of the iron ore with the coke obtained from the cracking are clearly divided, and the two objects of obtaining sponge iron are reasonably achieved.

Thus, in the practice of the process of this invention, heavy oil and iron ore can be processed in a large quantity in a consistent, integrated manner, and valuable light oil fractions and/or cracked gases and sponge iron can be advantageously produced at a high efficiency level without the accompanying formation of by-products of low commercial value in intermediate stages. Moreover, in spite of the consistency referred to above in the process of this invention, there is a relatively high degree of freedom of operational control as between the thermal cracking step and the reduction step.

Thus, as regards the heavy oil and the iron ore, which are the principal raw materials in these process steps, material with a wide range of properties can be readily processed. Furthermore, it is possible to use a wide range of operational conditions.

A specific example of practice, constituting a preferred embodiment of this invention, and modifications thereof, are now described in

detail with reference to the flowchart of the accompanying drawing. Throughout the following description, all quantities given in "percent" or "part(s)" are by weight.

Thermal cracking step

A vacuum distillation residue oil having the properties of a Conradson carbon of 5 to 40 percent and a specific gravity of 0.9 to 1.10 is introduced into the illustrated apparatus through a pipe-line 1 and, after being preheated to a temperature of 400°C. or below in a preheating furnace 2, is supplied to a cracking reactor 3 having the shape of an elongated vertical cylinder provided at its upper part with a cyclone 3*a* and a scrubber 6. Depending on requirements, it is also possible to use a tube-type cracking furnace capable of heating the feed oil to a temperature of 500°C or below instead of the preheating furnace 2.

Iron ore is introduced together with steam through a pipe-line 4 into the lower part of the reactor 3, or is introduced through a pipe-line 4*a* into substantially the upper middle part of the reactor.

In this case, for example, haematite with an average particle size of 10 to 200 $\mu$m in diameter may be mixed with the vacuum distillation residue oil to form a slurry which is introduced into the reactor 3. For the purpose of fluidizing the iron ore, steam is introduced into the reactor 3 through a pipe-line 5 in such manner that a flow speed within the reactor 3 of 0.03 to 1 meter/s is obtained.

The flow rates and temperatures of the iron ore particles and steam introduced into the cracking reactor 3 are controlled in such manner that a fluidized bed at a temperature of 400 to 630°C is formed within the reactor. In the practice of this invention, it is also possible, of course, to raise the thermal cracking temperature above 630°C so as partially to reduce the iron ore at this stage. However, since it is disadvantageous, in general, from the viewpoint of heat economy to raise the thermal cracking temperature in this manner, it is preferable to use a temperature in the above-stated range.

Various methods may be used to supply heat to the cracking reactor 3. Thus, for example, superheat steam which has been heated by means of a separate heat source may be supplied through the pipe-line 5; similarly, the iron ore particles may also be heated by a separate heat source.

The superficial velocity (W/H/W = (residual oil feed (*t/hr*))/(iron ore hold-up (*t*) of reactor)) within the reactor is, in general, 30 l/hr or less, and the pressure within the reactor is 2kg/cm²G (1.96 bar 6) or lower.

Approximately 70 to 90 percent of the vacuum distillation residue oil, for example, may be cracked to lighter products as a result of the reaction in the cracking reactor 3. From these products, iron ore and carbon powder formed are removed by a cyclone 3*a*, and the remaining products are sent through a scrubber 6 and a pipe-line 7 to a refinery system, including a rectifier or fractionator 8, in which they are fractionated into cracked gas, gasoline (petrol), light gas oil, heavy gas oil, and other products.

A portion of the heavy gas oil thus produced is recirculated through a pipe-line 9 to the scrubber 6 in the upper part of the cracking reactor 3, where it captures iron ore particles and fine poweder of the formed carbon, and, further, imparts a refluxing effect with respect to the cracking product oils, being thereafter returned to the cracking reactor 3.

On the other hand, approximately 10 to 30 percent, for example, of the vacuum distillation residue oil becomes a by-product carbon, which, being deposited on the iron ore particles, is taken out together therewith through the bottom of the cracking reactor 3 and through a pipe-line 10. In this operation, procedures such as the stripping of accompanying oil contents by steam supplied through the pipe-line 5 or some other auxiliary pipe-line are suitably carried out by ordinary methods. In the preheating of the feed oil in the preheater 2, measures such as returning a portion of the cracked oil from the cracking reactor 3 through a pipe-line 11 and mixing with the feed oil to prevent clogging due to coking in the preheater 2 are carried out in accordance with requirements.

Reduction step

By increasing or decreasing, for example, the quantity of iron ore particles supplied relative to the vacuum distillation residue oil in the above-described step of cracking heavy oil, the carbon in an amount required for the reduction of iron oxide in the iron ore particles is caused to deposit on the iron ore particles.

The iron ore particles on which the carbon is deposited are formed in pellets or briquettes each of a diameter in the range of 0.6 to 5 mm by means of a pelletizer 12 or a briquetting machine. At this stage the feeds are supplemented with suitable quantities of reducing agent prepared by separately pulverizing solid carbon such as anthracite or coke so as to adjust the composition of the reaction blend. The composite blend of iron ore and carbon thus formed is charaged into a rotary kiln 13, constituting a reducing furnace, and is heated to a temperature of 800 to 1,200°C by means of a combustion gas to produce sponge iron. The iron grade of this sponge iron is in the range of 85 to 95 percent. On the other hand, the waste gas from the kiln 13 is sent through a duct 14 to a heat recovery system.

By the above-described mode of practice, for example, 237 parts of a vacuum distillation residue oil (with a specific gravity of 0.92 and a carbon residue of 8.5 percent) of Taching crude oil and 137 parts of haematite of 66-percent iron content and with an average particle size of

150 mesh (Riodoce, Brazil) are introduced into a cracking reactor together with 21.8 parts of steam, and are subjected together to thermal cracking at a temperature of 530°C and superficial velocity of 3 tonnes/hr/tonne, whereby 22 parts of a hydrocarbon gas lighter than butane, 40 percent of cracked naphtha, and 162 parts of cracked gas oil are obtained. At the same time, 18.8 parts of carbon are deposited on the haematite particles. The haematite particles with carbon deposited thereon are mixed with 37.5 parts of powdered petroleum coke and formed into pellets of 36 x 19.8 x 4.8 mm in size. The composite pellets thus formed are introduced into a rotary kiln and subjected to reduction at a temperature of 1170°C for 1 hour. 100 parts of sponge iron with an iron content of approximately 92 percent being obtained.

The foregoing description concerns principally one example of a representative mode of practice of the process of producing sponge iron according to this invention. However, as mentioned hereinbefore, the process of this invention comprises steps which have relative independence, and, moreover, have flexibility with respect to operational control and choice of raw materials. For this reason, modifications other than those described above are possible, as illustrated below.

Cracking Step

The heavy oil used is a vacuum distillation residue oil of the above description.

As regards the iron ore, iron oxide ores such as the afore-mentioned haematite, magnetite, or mixtures thereof may be used. Examples of other iron ores which can be used are limonite and siderite.

Reduction Step

As mentioned hereinbefore, the reduction step according to this invention can be carried out in a shaft furnace, a fixed bed furnace, or a fluidized bed furnace in addition to a rotary kiln. In the case where a furnace other than a fluidized bed furnace is used, it is desirable that the iron ore particles with carbon from the cracking step deposited thereon should be enlarged in size into bodies such as pellets or briquettes, similarly to the case where a rotary kiln is used. In the case where a fluidized bed furnace is used, of course, it is unnecessary to form such enlarged bodies.

According to this invention as described above, iron ore particles on which by-product carbon obtained in the thermal cracking of heavy oil is deposited are used directly, or after being merely subjected to a simple pretreatment, as a starting material for the production of sponge iron, whereby useful light oil fractions, cracked gases, and sponge iron can be produced with high efficiency in an integrated manner with substantially no production as by-products of intermediate products of low commercial value. This is the most important advantage of this invention.

**Claims**

1. An integrated process for the thermal cracking of hydrocarbon oil and production of iron which comprises: thermally cracking the hydrocarbon oil in the presence of iron ore particles in a fluidized state in a thermal cracking reactor thereby to produce light oils and cracked gases; at the same time causing by-product carbon thus formed to deposit on the iron ore particles; and transferring the resulting carbon-deposited iron ore particles to a reducing furnace thereby to reduce the iron ore, characterised in that said hydrocarbon is a vacuum distillation residue oil having a Conradson carbon value of from 5 to 40 percent and a specific gravity of from 0.9 to 1.10, in that said carbon-deposited iron ore is introduced into the reducing furnace together with additional carbon, and in that the thus introduced mixture of the carbon deposited in ore and the additional carbon is heated at a temperature of from 800 to 1,200°C in the reducing furnace, thereby to produce sponge iron.

2. An integrated process according to Claim 1, characterised in that the iron ore is an ore selected from haematite, magnetite, limonite, siderite, and mixtures of at least two thereof.

3. An integrated process according to Claim 1 or Claim 2, characterised in that the thermal cracking reactor has the shape of an elongated vertical cylinder provided at its upper part with a cyclone and a scrubber, and in that the reducing furnace is a rotary kiln.

4. An integrated process according to any one of Claims 1 to 3, characterised in that the iron ore particles with the carbon deposited thereon are enlarged in size prior to being introduced into the reducing furnace.

5. An integrated process according to any one of Claims 1 to 4, characterised in that steam is injected into the thermal cracking reactor, thereby to fluidize the iron ore particles.

6. An integrated process according to any one of Claims 1 to 5, characterised in that the thermal cracking is carried out at a temperature within the range of from 400 to 630°C.

**Revendications**

1. Procédé intégré pour le craquage thermique d'huile d'hydrocarbures et la fabrication de fer consistant à craquer thermiquement l'huile d'hydrocarbures en présence de particules de minerai de fer à l'état fluidisé dans un réacteur de craquage thermique de manière à former des huiles légères et des gaz craqués, tout en faisant en sorte que du

carbone ainsi formé comme sous-produit se dépose sur les particules de minerai de fer, et à transférer les particules de minerai de fer ainsi chargées d'un dépôt de carbone dans un four de réduction de manière à réduire le minerai de fer, ce procédé étant caractérisé par le fait que l'hydrocarbure est un résidu de distillation sous vide ayant un taux de carbone Conradson de 5 à 40% et une densité de 0,9 à 1,10, que l'on introduit le minerai de fer portant une dépôt de carbone dans le four de réduction en même temps qu'un supplément de carbone et que l'on chauffe le mélange à une température de 800 à 1200°C dans le four de réduction de manière à former de l'éponge de fer.

2. Procédé selon la revendication 1, caractérisé par le fait que le minerai de fer est l'hématite, la magnétite, la limonite, la sidérite ou un mélange d'au moins deux de ces minerais.

3. Procédé selon l'une des revendications 1 et 2, caractérisé par le fait que le réacteur de craquage thermique présente la forme d'un cylindre vertical allongé muni à sa partie supérieure d'un cyclone et d'un laveur et que le four de réduction est un four rotatif.

4. Procédé selon l'une des revendications 1 à 3, caractérisé par le fait que l'on augmente la grosseur des particules de minerai de fer portant le dépôt de carbone avant de les introduire dans le four de réduction.

5. Procédé selon l'une des revendications 1 à 4, caractérisé par le fait que l'on injecte de la vapeur d'eau dans le réacteur de craquage thermique de manière à fluidiser les particules de minerai de fer.

6. Procédé selon l'une des revendications 1 à 5, caractérisé par le fait que l'on conduit le craquage thermique à température de 400 à 630°C.

## Patentansprüche

1. Ein integriertes Verfahren für die thermische Crackung von Kohlenwasserstofföl und Herstellung von Eisen, welches umfaßt: thermisches Cracken des Kohlenwasserstofföls in Gegenwart von Eisenerzteichen in einem aufgewirbelten Zustand in einem thermischen Crackreaktor, um dadurch leichte Öle und gecrackte Gas zu erzeugen; gleichzeitig bewirkend, daß sich auf diese Weise als Nebenproduckt geblideter Kohlenstoff auf den Eisenerzteilchen abscheidet; und Überführen der entstandenen, Kohlenstoffablagerungen aufweisenden Eisenteilchen zu einem Reducktionsofen, um das Eisenerz zu reduzieren, dadurch gekennzeichnet, daß der genannte Kohlenwasserstoff ein Rückstandsöl der Vakuumdestillation mit einem Conradsonwert von 5 bis 40 Prozent und einem spezifischen Gewicht von 0,9 bis 1,10 ist, daß das genannte Eisenerz mit den Kohlenstoffablagerungen in den Reduktionsofen zusammen mit zusätlichem Kohlenstoff eingespeist wird, und daß das auf diese Weise eingespeiste Gemisch aus dem Eisenerz mit den Kohlenstoffablagerungen und dem zusätlichen Kohlenstoff in dem Reduktionsofen auf eine Temperatur von 800 bis 1200°C erhitzt wird, um auf diese Weise Eisenschwamm zu erzeugen.

2. Ein integriertes Verfahren nach Anspruch 1, dadurch gekennzeichnet, daß das Eisenerz ein Erz, ausgewählt aus Haematit, Magnetit, Limonit, Siderit sowie Gemischen aus mindestens zwei von diesen, ist.

3. Ein integriertes Verfahren nach Anspruch 1 oder 2, dadurch gekennzeichnet, daß der thermische Crackreaktor die Form eines länglichen vertikalen Zylinders aufweist, welcher an seinem oberen Ende mit einem Zyklon und einem Abstreifer versehen ist, und daß der Reduktionsofen eine Drehrohrofen ist.

4. Ein integriertes Verfahren nach irgendeinem der Ansprüche 1 bis 3, dadurch gekennzeichnet, daß die Eisenerzteilchen mit dem darauf abgelagerten Kohlenstoff vor der Einspeisung in den Reduktionsofen in der Abmessung vergrößert werden.

5. Ein integriertes Verfahren nach irgendeinem der Ansprüche 1 bis 4, dadurch gekennzeichnet, daß in den thermischen Crackreaktor Dampf eingespritzt wird, um auf diese Weise die Eisenerzteilchen aufzuwirbeln.

6. Ein integriertes Verfahren nach irgendeinem der Ansprüche 1 bis 5, dadurch gekennzeichnet, daß die thermische Crackung bei einer Temperatur im Bereich von 400 bis 630°C durchgeführt wird.

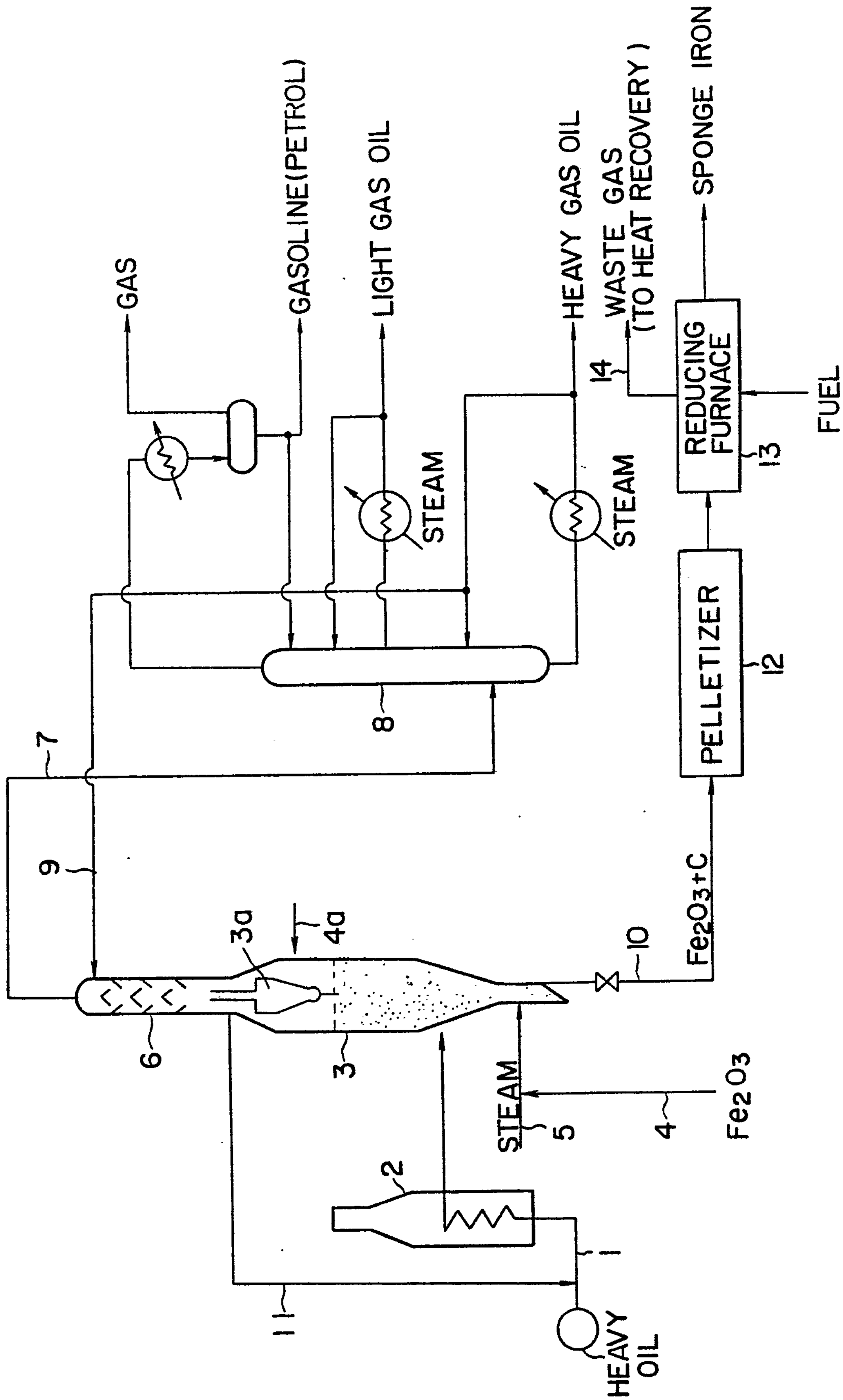
GAS
GASOLINE(PETROL)
LIGHT GAS OIL
HEAVY GAS OIL
WASTE GAS
(TO HEAT RECOVERY)
SPONGE IRON
STEAM
STEAM
14
REDUCING
FURNACE
13
FUEL
PELLETIZER
12
8
7
9
Fe$_2$O$_3$+C
10
3a
4a
6
3
STEAM
5
4
Fe$_2$O$_3$
2
1
11
HEAVY
OIL